(19) Europäisches Patentamt
European Patent Office
Office européen des brevets

(11) **EP 3 541 996 B1**

(12) **EUROPEAN PATENT SPECIFICATION**

(45) Date of publication and mention
of the grant of the patent:
**01.07.2020  Bulletin 2020/27**

(21) Application number: **16805163.9**

(22) Date of filing: **21.11.2016**

(51) Int Cl.:
*E01C 19/05* (2006.01)     *B09B 3/00* (2006.01)
*B30B 11/00* (2006.01)     *C04B 18/02* (2006.01)
*C04B 26/26* (2006.01)

(86) International application number:
**PCT/FI2016/050817**

(87) International publication number:
**WO 2018/091769 (24.05.2018 Gazette 2018/21)**

(54) **METHOD AND SYSTEM FOR PROCESSING ASPHALT PAVEMENT ROAD FOR RECYCLING PURPOSES, AND USE OF BRIQUETTES OBTAINABLE BY SUCH METHOD**

VERFAHREN UND SYSTEM ZUR VERARBEITUNG EINER ASPHALTFAHRBAHN FÜR RECYCLINGZWECKE UND VERWENDUNG VON DURCH SOLCH EIN VERFAHREN ERHALTENEN BRIKETTS

PROCÉDÉ ET SYSTÈME DE TRAITEMENT DE CHAUSSÉE AU REVÊTEMENT BITUMINEUX À DES FINS DE RECYCLAGE, ET UTILISATION DE BRIQUETTES POUVANT ÊTRE OBTENUES PAR UN TEL PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.09.2019  Bulletin 2019/39**

(73) Proprietor: **Amomatic Oy**
**21530 Paimio (FI)**

(72) Inventors:
• **VUORINEN, Pasi**
**20100 Turku (FI)**

• **SUOMI, Kai**
**21530 Paimio (FI)**
• **KASVI, Casimir**
**20880 Turku (FI)**
• **SILLANPÄÄ, Jukka**
**21570 Sauvo (FI)**

(74) Representative: **Aaltonen, Janne Lari Antero et al**
**Moosedog Oy**
**Rykmentintie 2B**
**20810 Turku (FI)**

(56) References cited:
**EP-A1- 0 810 276     DE-A1-102006 038 614**
**FR-A1- 3 020 074     JP-A- 2005 009 186**

**Description**

TECHNICAL FIELD

The present disclosure relates to a method for processing an asphalt pavement road according to the preamble of claim 1, to a system for processing an asphalt pavement road according to the preamble of claim 7 and to an use of briquettes by the method according to the preamble of claim 11.

BACKGROUND

The majority of existing roads (or roadways) are either made of concrete or asphalt. Typically, such roads require periodic maintenance, in which concrete mixture or asphalt concrete may be laid in damaged portions of a road for the maintenance purpose. Otherwise, a significantly damaged road may be constructed again. Further, in case of an asphalt road, the process of maintenance or newly constructing the road may involve use of "reclaimed asphalt pavement", i.e. reusing recycled pieces of reclaimed asphalt pavement.

Typically, recycling of the reclaimed asphalt pavement involves various steps, for example, breaking an asphalt pavement road into pieces, cleaning the pieces, heating the pieces and so forth. Typically, the recycling of the reclaimed asphalt pavement yields a primary intermediate product, i.e. bitumen (or asphalt), a highly hydrophilic material, which may absorb humidity and soon transform into a solid piece. Therefore, such recycled bitumen should be reused in a short timefrom its formation. For example, based on the environmental conditions, the extracted bitumen should be reused after few hours or after few tens of minutes. Accordingly, it is very difficult to store and transport the extracted bitumen. Alternatively, energy intensive ways (such as substantial heating) may be used to evaporate humidity (absorbed by the extracted bitumen during recycling) for reusing the extracted bitumen. Document EP 810276 presents a method for recycling asphalt. The asphalt broken into pieces is separated, if necessary, into two fractions which are each fed to a respective proportioning unit. The fractions are then combined, in a changed weight ratio, in a mixing apparatus in which the fractions are mixed with a binder. In the proportioning units the asphalt particles are preferably heated virtually exclusively by steam, most or all of which condenses. It is thus possible to produce, with very low emissions, a high-quality asphalt consisting of virtually completely reused asphalt with a very small addition of a binder or unused asphalt. Surfacing a road with old, tar-containing asphalt which has been heated virtually exclusively by steam, the said steam condensing in its entirety, is possible with very low emission of polycyclic aromatic compounds.

Therefore, in light of the foregoing discussion, there exists a need to overcome the aforementioned drawbacks associated with processing of reclaimed asphalt pavement for recycling purposes.

SUMMARY

The present disclosure seeks to provide a method for processing an asphalt pavement road for recycling purposes. The present disclosure also seeks to provide a system processing an asphalt pavement road for recycling purposes. The present disclosure seeks to provide a solution to the existing problems of high energy requirements for recycling the reclaimed asphalt pavement, and storing and transporting extracted bitumen. An aim of the present disclosure is to provide a solution that overcomes at least partially the problems encountered in prior art, and provide a cost and energy efficient as well as a reliable solution for recycling reclaimed asphalt pavement.

In one aspect, an embodiment of the present disclosure provides a method processing an asphalt pavement road for recycling purposes, the method comprising steps of:

- treating pieces of reclaimed asphalt pavement by accelerating the pieces of the reclaimed asphalt pavement with centrifugal force and making the pieces to impact a wall and each other, to form crushed material blocks;
- sorting the crushed material blocks based on size;
- selecting crushed material blocks having a predetermined maximum diameter; and
- compressing the selected crushed material blocks to form a briquette.

In another aspect, an embodiment of the present disclosure provides a system for processing an asphalt pavement road for recycling purposes, the system comprising:

- an impactor machine for treating pieces of reclaimed asphalt pavement by accelerating the pieces of the reclaimed asphalt pavement with centrifugal force and making the pieces to impact a wall and each other, to form crushed material blocks;
- a sieve for sorting the crushed material blocks; and
- a compressor for compressing briquettes from the crushed material blocks.

In a further aspect, the present disclosure relates to use of briquettes obtainable by the present method, for making asphalt concrete, wherein the briquettes are added in an asphalt mixing process.

Embodiments of the present disclosure substantially eliminate or at least partially address the aforementioned problems in the prior art, and enables efficient recycling of reclaimed asphalt pavement.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

FIG. 1 is a schematic illustration of a system for processing an asphalt pavement road for recycling purposes, in accordance with an embodiment of the present disclosure;

FIG. 2 is a schematic illustration of a piece of reclaimed asphalt pavement, in accordance with an embodiment of the present disclosure;

FIG. 3 is a schematic illustration of a treated piece of reclaimed asphalt pavement, in accordance with an embodiment of the present disclosure;

FIG. 4 is a schematic illustration of exemplary crushed material blocks derived from the treated piece of FIG. 3, in accordance with an embodiment of the present disclosure;

FIG. 5 is a graph depicting a relative amount of bitumen in the crushed material blocks as function of radii associated with the crushed material blocks, in accordance with an embodiment of the present disclosure;

FIG. 6 is a graph depicting a thickness of bitumen layers (for the crushed material blocks) as a function of a total radius of crushed material blocks, in accordance with an embodiment of the present disclosure; and

FIG. 7 is illustrates steps of a method for processing an asphalt pavement road for recycling purposes, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible. The details and embodiments disclosed in connection with the method apply mutatis mutandis to the system and vice versa. The same applies to the uses.

In one aspect, an embodiment of the present disclosure provides method for processing an asphalt pavement road for recycling purposes, the method comprising steps of:

- treating pieces of reclaimed asphalt pavement by accelerating the pieces of the reclaimed asphalt pavement with centrifugal force and making the pieces to impact a wall and each other, to form crushed material blocks;
- sorting the crushed material blocks based on size;
- selecting crushed material blocks having a predetermined maximum diameter; and
- compressing the selected crushed material blocks to form a briquette.

In another aspect, an embodiment of the present disclosure provides a system for processing an asphalt pavement road for recycling purposes, the system comprising:

- an impactor machine for treating pieces of reclaimed asphalt pavement by accelerating the pieces of the reclaimed asphalt pavement with centrifugal force and making the pieces to impact a wall and each other, to form crushed material blocks;
- a sieve for sorting the crushed material blocks; and
- a compressor for compressing briquettes from the crushed material blocks.

In a further aspect, the present disclosure relates to use of briquettes obtainable by the present method, for making asphalt concrete, wherein the briquettes are added in an asphalt mixing process.

The present disclosure provides a method and a system for processing an asphalt pavement road for recycling purposes. It also provides a use of briquettes obtainable by the present method and system. Specifically, the present disclosure is associated with recycling of reclaimed asphalt pavement for extracting asphalt (or bitumen) therefrom. Further, the present disclosure provides a cost and energy efficient, and a reliable solution for recycling the reclaimed asphalt pavement. Specifically, briquettes obtained by the method and the system of the present disclosure do not absorb much moisture, thus do not tend to solidify, and are therefore easy to store and transport. Moreover, this precludes a need for energy intensive ways for evaporating humidity (generally absorbed by conventionally extracted bitumen) for reusing the conventionally extracted bitumen, and therefore processing an asphalt pavement road for reuse becomes cost efficient with the present method and system.

In the present description, the term "asphalt" (or bitumen) refers to a black viscous mixture of hydrocarbons obtained naturally or as a residue from petroleum distillation, also generally known as "tar".

Furthermore, the term "asphalt pavement road" used herein refers to a road made from asphalt concrete, also known as "tarmac". An average asphalt pavement consists of a road structure above a formation level which includes unbound and bituminous-bound materials. This gives the pavement an ability to distribute loads of the traffic before the load reaches the formation level.

The term "asphalt concrete" used herein refers to a mixture of particles of crushed rock (and/or sand, gravel or slag, sometimes referred to as aggregate), binder and filler, used for constructing and maintaining the asphalt pavement roads (or parking areas, sports areas etc.). Mostly, diameters of the particles of crushed rock (and/or sand, gravel or slag or aggregate) vary from almost dust of few micrometers (μm) to 3 millimetre (mm) or to larger pieces of 3 mm to 30 mm or so. The particles of crushed rock (and/or sand, gravel or slag) are bind together into a cohesive mixture using the binder. Typically, bitumen is used as the binder. Further, an asphalt pavement typically includes 3-8 % bitumen, and in average 5 % bitumen.

The term "reclaimed asphalt pavement" (RAP) used herein typically relates to pieces (or blocks) of an asphalt pavement road (typically a damaged asphalt pavement road). For example pealing or digging out old (or damaged) asphalt pavement road may result in pieces of the reclaimed asphalt pavement, which may include pieces having a diameter of from 1 centimetre (cm) to over 50 cm. In an example, the pieces of the asphalt pavement road may include pieces having a diameter of 1-100 mm.

The method comprises treating pieces of reclaimed asphalt pavement to form crushed material blocks. The term "crushed material blocks" used herein primarily includes asphalt (or bitumen) and pieces of rock or sand (aggregates). Specifically, the crushed material blocks include small particles (of either crushed rocks, sand, gravel or slag) surrounded by a layer of bitumen. For example, each crushed material block includes a small particle of sand, i.e. smaller than 3 mm in diameter, surrounded by the layer of bitumen. For example, the crushed material block may include a size of 3.2 mm in diameter, i.e. the small particle of the sand may include 3 mm diameter surrounded by a layer of bitumen having a thickness of 0.2 mm. A crushed material block might include two or more particles of sand or rock (aggregate) and bitumen to keep the particles (aggregates) together.

In an embodiment, treating the pieces of reclaimed asphalt pavement primarily includes breaking the pieces of the reclaimed asphalt pavement to form the crushed material blocks. For example, the pieces of the reclaimed asphalt pavement may be treated using an impactor machine, such as a Vertical Shaft Impactor (VSI) crusher to form the crushed material blocks. Optionally, the pieces of the reclaimed asphalt pavement may be treated (i.e. broken to pieces of a certain size) using machines such as crushers, a horizontal shaft impactor and so forth.

In one embodiment, treating the pieces of reclaimed asphalt pavement may include cleaning (or washing) the pieces prior to feeding the pieces into the impactor machine. Treating the pieces of reclaimed asphalt pavement may include feeding the pieces into the impactor machine, for example using a conveyor belt arrangement and/or a lifting arrangement. For example, the pieces of the reclaimed asphalt pavement (typically having a size of 1-100 mm) may be fed into a feed hopper, operable to control the amount of the pieces to be fed into (or processed by) the impactor machine. The pieces of the reclaimed asphalt pavement from the feed hopper may be dropped at a conveyor belt for being carried to a lifting unit. Thereafter, the lifting unit may elevate the pieces (of the reclaimed asphalt pavement) to a top of the impactor machine, typically 6-40 meter high. Thereafter, the pieces may be fed, with a second conveyor belt, into the impactor machine, such as the VSI crusher.

Formation of the crushed material blocks is carried out by accelerating the pieces of the reclaimed asphalt pavement with centrifugal force and making the pieces to impact a wall and each other. As explained herein, the method of the present disclosure may use the impactor machine, such as the VSI crusher, for the formation of the crushed material blocks. Specifically, the pieces of reclaimed asphalt pavement (having a size of for example 1-100 mm) may be fed into the impactor machine, which accelerates the pieces with centrifugal force and makes the pieces to impact the wall of the impactor machine at least once (or multiple times). Further, the pieces may strike each other when centrifugally accelerated towards the wall (or reflected back from the wall).

According to an embodiment, the crushed material blocks are configured (or formed) to have a predetermined maximum diameter, preferably 3 mm diameter. Depending upon an operating speed (such as a circumferential speed) of the VSI crusher, the crushed material blocks may be configured to have such size. In an example, the VSI crusher is adapted to operate at a circumferential speed, i.e. in a range of 20-100 m/s, which yields crushed material blocks having diameter around 3 mm. More preferably the speed is in a range of 30-70 m/s and even more preferably in a range of 40-60 m/s. For example, the speed may be from 20, 30, 40, 45, 50, 60, 70, 75, 80, or 85 m/s up to 30, 40, 45, 50, 60, 70, 75, 80, 85, 90, 95 or 100 m/s.

An actual driving speed for the VSI crusher can be determined experimentally for each of the different asphalt types to be recycled, with a few trial-and-error tests. As an example based on tests, a speed of 50.8 m/s for SMA (stone mastic asphalt) asphalt type gave better results than 72 m/s. When using a lower speed than 50.8 m/s the size of the resulting crushed material blocks was too large and when using a speed of 72 m/s or higher the size of the crushed material blocks was too small (due to the high speed breaking also some of the rocks within the crushed material blocks). Additionally, the ranges can be scaled to take in account different asphalt types. The ranges can be multiplied for example by 0.5-2 or 0.7-1.5 or 0.8-1.2 to take into account stiffness and composition of the asphalt to be recycled, as well as desired crushed material blocks size distribution.

In an embodiment, the VSI crusher may apply sufficient force on the pieces (or the VSI crusher operate at a specific circumferential speed) to form crushed material blocks, which may be completely covered with a bitumen layer. Specifically, if the force applied on the pieces is too large, the crushed material blocks may further break, forming smaller fragments of the crushed material blocks without bitumen or no bitumen layer at certain portions of the crushed material blocks. Alternatively, if the force applied on the pieces is too small, pieces of reclaimed asphalt may not break, forming large fragments of the crushed material blocks with only few small fragments. Therefore, the circumferential speed of the VSI crusher may be regulated such that a required force may be applied on the pieces to form crushed material blocks of preferable sizes, e.g. diameter around 3 mm or smaller. In an example, the crushed material blocks may be configured to have a size distribution, such as a diameter of 0.5 mm, 1 mm, 3 mm, 5 mm, and so forth. It may be evident that breaking the pieces of the reclaimed asphalt pavement (using the VSI crusher) may yield crushed material blocks, and particles of rock, sand, dust, and so forth. The size distribution varies depending on the asphalt type. Based on alternative or additional embodiment, test samples of pieces of reclaimed asphalt pavement were broken with a VSI crusher to derive a size distribution for a set of driving speeds. In one embodiment, the size of crushed material blocks is selected such that 20-80 % of the crushed material blocks are equal or smaller than 3 mm of diameter. Further, a VSI crusher can be used (or driven) with such speed that the pieces of reclaimed asphalt pavement and formed crushed material blocks hit each other during the crushing. Additionally, the formed crushed material blocks "roll" inside the VSI crusher further contributing to the size distribution as well as form factor of the crushed material blocks. Additionally, the formed crushed material blocks can be reprocessed through the VSI crusher to improve the size distribution of the crushed material blocks if needed. I.e the process of crushing pieces of reclaimed asphalt pavement can be complemented by feeding at least part of previously crushed material blocks in the VSI.

The method comprises sorting the crushed material blocks based on size. The method also comprises selecting the crushed material blocks having a predetermined maximum diameter. According to an embodiment, the crushed material blocks comprise rock and bitumen.

In an embodiment, the method includes using a sieve for sorting and selecting the crushed material blocks having the predetermined maximum diameter. Specifically, the crushed material blocks received from the impactor machine may be allowed to pass through the sieve for sorting and selecting the crushed material blocks having the predetermined maximum diameter. In an example, the predetermined maximum diameter is 3 mm, i.e. the sieve is operable to separate crushed material blocks from a mix of crushed material blocks the particles of rock, sand, dust, and so forth (which is formed after breaking the pieces of reclaimed asphalt pavement using the impactor machine). In an example, the sieve is operable to filter the said mix to segregate the crushed material blocks (from the mix) in two groups, a first group of the crushed material blocks having a maximum diameter of 3 mm (so-called fine material) and a second group of the crushed material blocks having a maximum diameter greater than 3 mm (large size material). It may be evident that small particles, such as sand or rock or slag or dust particles having a diameter of less than 3 mm, may also pass through the sieve along with the first group of the crushed material blocks (having a diameter of 3 mm) while segregating.

In another embodiment, the predetermined maximum diameter for sorting and selecting the crushed material blocks may be less or more than 3 mm, such as 1 mm, 4 mm, 6 mm and up to 14 mm. The predetermined maximum diameter may be for example 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13 or 14 mm, or higher or lower. Specifically, the predetermined maximum diameter of the crushed material blocks may be further associated with a certain amount of bitumen in the crushed material blocks for sorting and selecting the crushed material blocks (for briquettes formation, which is explained in greater detail herein later).

In one embodiment, the operating speed (or the circumferential speed) of the impactor machine may be regulated in a manner such that the impactor may also help in sorting the crushed material blocks having the predetermined maximum diameter.

The method of the present disclosure further includes compressing the selected crushed material blocks to form briquettes. Specifically, the sieve is arranged to feed the crushed material blocks (fine material) having the predetermined diameter range to a compressor. For example, an outlet from the sieve may be configured to direct the crushed material blocks having the predetermined maximum diameter towards the compressor. In an embodiment, the compressor is a briquette compressor (or a briquette compressing machine), operable to apply compression force on the selected crushed material blocks (of predetermined maximum diameter) to from the briquettes. In an example, the compression force (applied by the briquette compressor on the selected crushed material blocks) is in a range of 10-70 kilonewton per centimetre (kN/cm). The compression force may be for example from 10, 15, 20, 25, 30, 35, 40, 45, 50, 55 or 60 kN/cm up to 15, 20, 25, 30, 35, 40, 45, 50, 55, 60, 65 or 70 kN/cm.

In an embodiment, the briquettes may be configured to have a size of 20-30 mm. For example, the briquettes may be configured to have either a cylindrical or a cubical shape having a length in the range of 20-30 mm. For example, the briquettes (cylindrical shape) may include a diameter of 10 mm or 20 mm and a height of 20 mm or 30 mm, respectively.

According to an embodiment, as mentioned above, the pieces may be treated with impact such that the pieces break down to crushed material blocks having the predetermined maximum diameter and a layer of bitumen around them. In other words, the crushed material blocks may be configured to have a spherical shape covered with a uniform layer of bitumen. By spherical it is intended both perfectly rounded and approximately rounded pieces. In such instance, assuming that a layer of bitumen is of approximately constant thickness around the crushed material blocks, and the crushed material blocks have a spherical shape, then a relative amount of bitumen in a crushed material block (for example in a briquette) may be a function of total radius of the crushed material blocks. Therefore, the amount of bitumen in a crushed material block may be calculated using the equation below:

$$V_b = V_t - V_s = \frac{4}{3} \Pi \left( r_t^3 - r_s^3 \right)$$

wherein

$V_b$ is volume of bitumen;
$V_t$ is total volume of the crushed material block);
$V_s$ is volume of a sand particle covered by the bitumen layer;
$r_t$ is total radius (sum of radii of the sand particle and the bitumen layer); and
$r_s$ is radius of the sand particle.

Thus, a ratio of volume of bitumen to total volume may be calculated using equation below:

$$\frac{V_b}{V_t} = \frac{\frac{4}{3} \Pi \left( r_t^3 - r_s^3 \right),}{\frac{4}{3} \Pi \left( r_t^3 \right)} = \frac{r_t^3 - r_s^3}{r_t^3} = 1 - \left( \frac{r_s}{r_t} \right)^3$$

Accordingly, in an example, if a crushed material block has a total radius of 1.2 mm (sum of radii of the sand particle and the bitumen layer), thickness of a bitumen layer of 0.2 mm, and radius of the sand particle of 1 mm, the volume of bitumen in the crushed material block may be determined as a function of the radii. For example, in this instance a percentage of volume of the bitumen in the crushed material block may be calculated as follows:

$$\frac{V_b}{V_t} = 1 - \left( \frac{1}{1.2} \right)^3 = 1 - 0.58 = 0.42$$

Therefore, in the above instance a percentage of volume of the bitumen in the crushed material block is 42 %. Accordingly, when a radius of a crushed material block is more than 1 mm, a percentage of volume of bitumen covering such crushed material block may be more than 40 % (when compared to a total volume of the crushed material block). Similarly, a relative amount of bitumen in a crushed material block may be more than 40 %. It may be evident that to estimate the relative amount of bitumen in the crushed material block, dimensions of the crushed material block (such as cylindrical or cubical briquette) may be known. Further, a relative amount of bitumen in the briquette may be more than 40 %. Indeed, the relative amount of bitumen in the briquette may vary depending on the use of the briquette as well as for example the environment of use. The relative amount of bitumen in the briquette may be for example from 10, 20, 30, 40, 50, or 60 % up to 20, 30, 40, 50, 60 or 70 % (volume-%).

According to an embodiment, an amount of bitumen on top of a crushed material block (or volume of bitumen compared to a total volume of crushed material block) depends on physical properties of the bitumen and temperature and centrifugal force applied to the pieces of the reclaimed asphalt pavement (during the treatment using the vertical shaft impact crusher).

In one embodiment, the needed temperature and force (for having at least 40 % of bitumen in a crushed material block) may be estimated by testing (or subjecting) the samples of pieces of the reclaimed asphalt pavement with various temperature and centrifugal force. Thereafter, by determining an average amount of bitumen yield for different sizes of the crushed material blocks. Therefore, the method of the present disclosure enables in modulating and achieving various operating conditions (i.e. temperature and centrifugal force) for the VSI crusher to produce crushed material blocks in which a relative amount of bitumen is more than 40 %. Similarly, a relative amount of bitumen in the briquettes may be more than 40 %.

According to an embodiment, the present disclosure also provides a use of briquettes obtainable by the method disclosed hereinabove. Specifically, the briquettes are added in an asphalt mixing process. For example, the briquettes may be added in the asphalt mixing process to form asphalt concrete, which may be used in construction or repair of asphalt construction. In an example, the asphalt concrete may be used in asphalt based constructions such roads, parking places, runways, floors, landfill caps, railroads, and so forth. Additionally, the asphalt concrete may be used for waterproofing, sealing roofs, and so forth. Further, an amount of briquettes used as replacement or with untreated reclaimed asphalt pavement may in a range of 1 % to 95 % of total amount of asphalt required (for preparing the asphalt concrete). The amount of briquettes may be for example from 1, 5, 10, 15, 20, 30, 35, 40, 50, 60, 65, 70 or 80 % up to 5, 10, 15, 20, 30, 35, 40, 50, 60, 65, 70, 80, 85, 90 or 95 %.

The present disclosure also provides a system for processing an asphalt pavement road for recycling purposes. The system comprises an impactor machine for treating pieces of reclaimed asphalt pavement to form crushed material blocks; a sieve for sorting the crushed material blocks; and a compressor for compressing briquettes from the crushed material blocks.

In an embodiment, the impactor machine is a vertical shaft impact crusher. Further, the sieve is arranged to sort and feed a predetermined diameter range of crushed material blocks to the compressor. Moreover, the compressor is briquette compressor.

DETAILED DESCRIPTION OF THE DRAWINGS

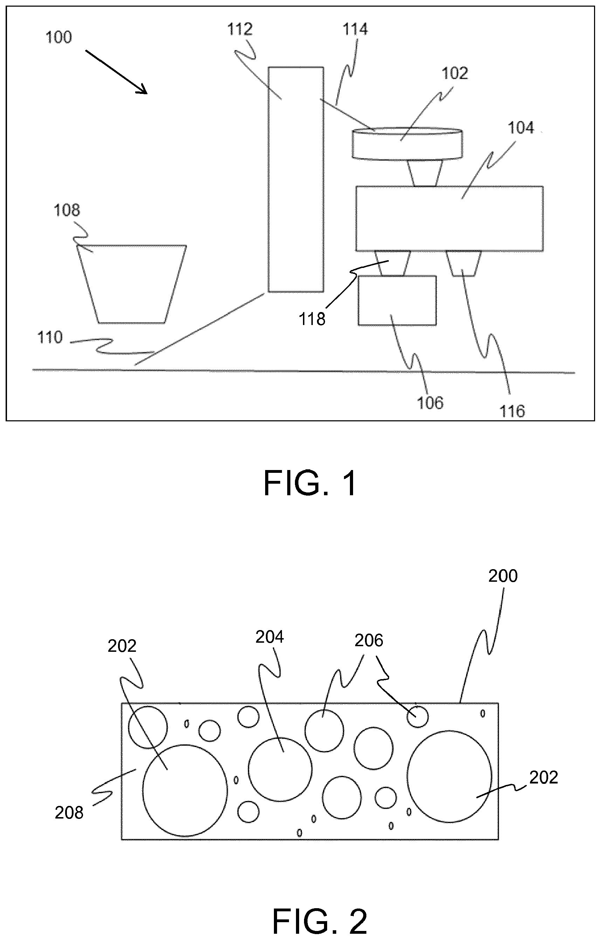

FIG. 1 is a schematic illustration of a system **100** for processing an asphalt pavement road for recycling purposes, in accordance with an embodiment of the present disclosure. As shown, the system **100** includes an impactor machine **102** for treating pieces of reclaimed asphalt pavement to form crushed material blocks. The system **100** also includes a sieve **104** for sorting the crushed material blocks. The system **100** further includes a compressor **106** for compressing the crushed material blocks to form briquettes.

The system **100** also includes a feed hopper **108** for controlling an amount of the pieces of the reclaimed asphalt pavement to be processed by the system **100**. The system **100** further includes a first conveyor belt **110** for transporting the pieces of the reclaimed asphalt pavement to a lifting unit **112,** and a second conveyor belt **114** for transporting the pieces of the reclaimed asphalt pavement from the lifting unit **112** to the impactor machine **102**. The system **100** also includes outlets, such as outlets **116** and **118,** for allowing unwanted particles (such as sand and rocks having size more than a predetermined maximum diameter) and the crushed material blocks (conforming to the size of the predetermined maximum diameter) to be separately outputted by the sleeve **104**. The outlet **118** accordingly feeds the compressor **106** with the crushed material blocks conforming to the size of the predetermined maximum diameter for forming the briquettes.

FIG. 2 is a schematic illustration of a piece **200** of reclaimed asphalt pavement, in accordance with an embodiment of the present disclosure. The piece **200** includes different sizes of particles of sand (or crushed rock or gravel or slag), such as large sized particles **202,** medium sized particles **204,** and small sized particles **206**. Further, the piece **200** (of the reclaimed asphalt pavement) also includes bitumen **208** covering the particles **202, 204, 206.**

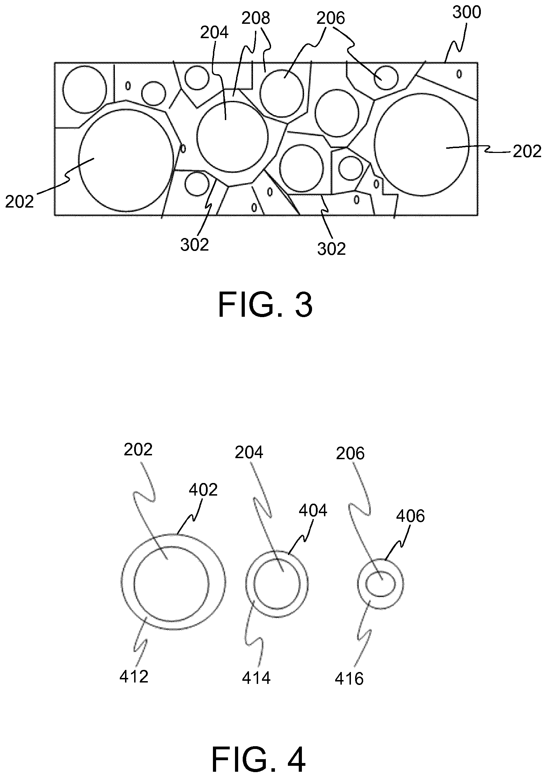

FIG. 3 is a schematic illustration of a treated piece **300** of reclaimed asphalt pavement, in accordance with an embodiment of the present disclosure. The treated piece **300** is an intermediate state of the piece **200** (of the reclaimed asphalt pavement of FIG. 2) during treatment with an impactor machine (such as the impactor machine **102** of FIG. 1). As shown, the treated piece **300** includes a number of cracks (or fracture lines) **302** in the bitumen **208** and around the particles **202, 204, 206.**

FIG. 4 is a schematic illustration of exemplary crushed material blocks **402, 404** and **406,** in accordance with an embodiment of the present disclosure. Specifically, the crushed material blocks **402, 404** and **406** are formed from the treated piece **300** (of FIG. 3) when broken down along the cracks **302.** As shown, the crushed material blocks **402, 404** and **406** include spherical shape and different sizes (large, medium and small). Further, each of the crushed material blocks **402, 404** and **406** include a particle (of a sand, rock, gravel or slag), such as the particles **202, 204, 206,** respectively; and a layer of bitumen **208,** such as layers **412, 414** and **416,** on the particles **202, 204, 206,** respectively. Further, among the crushed material blocks **402, 404** and **406,** for example, the crushed material blocks **404, 406** conform to the size of the predetermined maximum diameter.

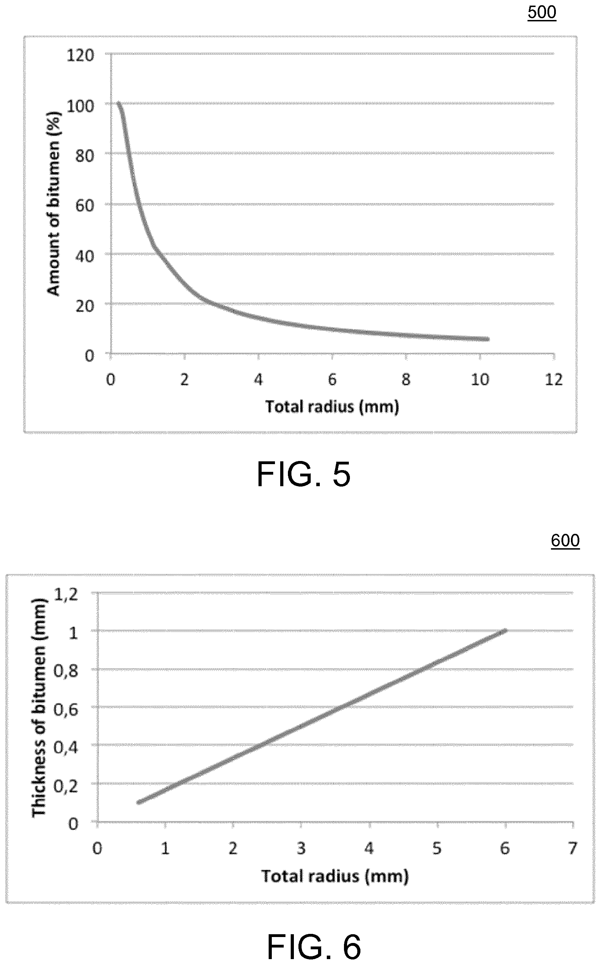

Referring to FIG. 5, illustrated is a graph **500** depicting a relative amount of bitumen in crushed material blocks as a function of a total radius of the crushed material block, in accordance with an embodiment of the present disclosure. As shown, the graph **500** includes a parameter of total radius (for the crushed material blocks, in mm) along X-axis, and another parameter of amount of bitumen (in percentage, or relative amount) along Y-axis. Based on the graph **500,** when total radius of crushed material blocks is less than 1 mm, the relative amount of bitumen in such crushed material blocks is more than 40 %. Further, if the total radius of crushed material blocks is more than 2, mm the amount of bitumen in such crushed material blocks is less than 20 %, and so forth. Therefore, the crushed material blocks (having the relative amount of bitumen of more than 40 % or sizes conforming to the predetermined maximum diameter) may be selected for forming briquettes.

Referring to FIG. 6, illustrated is a graph **600** depicting a thickness of bitumen layers (for crushed material blocks) as a function of a total radius of crushed material blocks, in accordance with an embodiment of the present disclosure. As shown, the graph **600** includes a parameter of total radius (of the crushed material blocks, in mm) along X-axis, and another parameter of thickness of bitumen layers (for crushed material blocks, in mm) along Y-axis. Based on the graph **600,** when total radius of crushed material blocks is less than 1 mm, the thickness of bitumen layers in such crushed material blocks is about 0.2 mm. Further, if the total radius of crushed material blocks is more than 2 mm, the thickness of bitumen layers in such crushed material blocks is about 0.4 mm, and so forth. Therefore, the crushed material blocks, based on the graph **600,** include different sizes but still conform to a predetermined maximum diameter (which can be 1 mm, 2 mm and up to 7 mm) as the relative amount of bitumen is more than 40 % for such crushed material blocks.

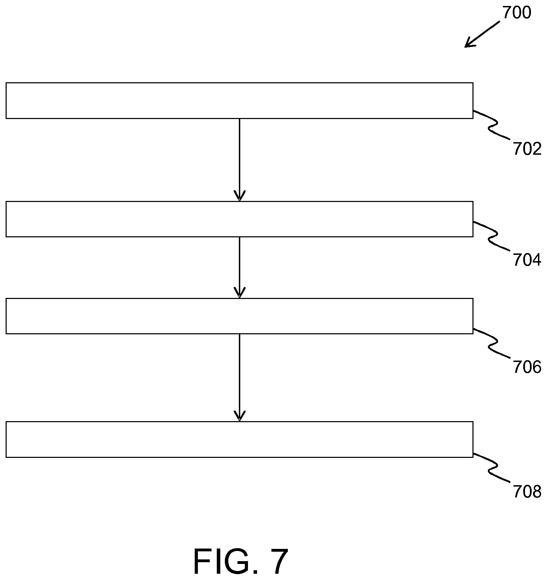

Referring to FIG 7, illustrated are the steps of a method **700** for processing an asphalt pavement road for recycling purposes, in accordance with an embodiment of the present disclosure. At step **702,** pieces of reclaimed asphalt pavement are treated to form crushed material blocks. At step **704,** the crushed material blocks are sorted based on size. At step **706,** the crushed material blocks having a predetermined maximum diameter are selected. At step **708,** the selected crushed material blocks are compressed to form a briquette.

The steps **702-708** are only illustrative and other alternatives can also be provided where one or more steps are added or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method for processing an asphalt pavement road for recycling purposes, the method comprising steps of:

    - treating pieces (200) of reclaimed asphalt pavement to form crushed material blocks (402, 404, 406);
    - sorting the crushed material blocks based on size;
    - selecting crushed material blocks having a predetermined maximum diameter;

    **characterised in that** the pieces of reclaimed asphalt pavement are treated by accelerating the pieces of the reclaimed asphalt pavement with centrifugal force and making the pieces to impact a wall and each other; and **in that** the method further comprises

    - compressing the selected crushed material blocks to form a briquette.

**2.** A method according to claim 1, wherein the predetermined maximum diameter is 3 mm.

**3.** A method according to claim 1 or 2, wherein a circumferential speed is 20-100 m/s.

**4.** A method according to any of the preceding claims, wherein a compression force is 10-70 kN/cm.

**5.** A method according to any of the preceding claims, wherein the compression is carried out with a briquette compressing machine.

**6.** A method according to any of the preceding claims, wherein the crushed material blocks (402, 404, 406) comprise rock (202, 204, 206) and bitumen (208).

**7.** A system (100) for processing an asphalt pavement road for recycling purposes, the system comprising:

　　　- an impactor machine (102) for treating pieces (200) of reclaimed asphalt pavement to form crushed material blocks (402, 404, 406);
　　　- a sieve (104) for sorting the crushed material blocks;

**characterised in that**
the impactor machine is arranged to treat pieces of reclaimed asphalt pavement by accelerating the pieces of the reclaimed asphalt pavement with centrifugal force and making the pieces to impact a wall and each other;
and **in that** the system further comprises

　　　- a compressor (106) for compressing briquettes from the crushed material blocks.

**8.** A system according to claim 7, wherein the impactor machine (102) is a vertical shaft impact crusher.

**9.** A system according to any of the claims 7-8, wherein the sieve (104) is arranged to sort and feed a predetermined maximum diameter range of crushed material blocks (402, 404, 406) to the compressor (106).

**10.** A system according to any of the claims 7-9, wherein the compressor (106) is a briquette compressor.

**11.** Use of briquettes obtainable by a method of claim 1 for making asphalt concrete, wherein the briquettes are added in an asphalt mixing process.

**12.** Use according to claim 11, wherein the amount of briquettes is 1-95 %, as replacement or with untreated reclaimed asphalt pavement.


**Patentansprüche**

**1.** Verfahren zur Aufbereitung einer Asphaltfahrbahn für Recyclingzwecke, wobei das Verfahren folgende Schritte umfasst:

　　　- Behandeln von Stücken (200) von ausgebautem Asphaltbelag zur Bildung von zerkleinerten Materialblöcken (402, 404, 406);
　　　- Sortieren der zerkleinerten Materialblöcke nach Größe;
　　　- Auswählen von zerkleinerten Materialblöcken mit einem vorgegebenen Höchstdurchmesser;

**dadurch gekennzeichnet, dass** die Stücke von ausgebautem Asphaltbelag behandelt werden, indem die Stücke von ausgebautem Asphaltbelag per Fliehkraft beschleunigt werden und bewirkt wird, dass die Stücke auf eine Wand aufprallen und aufeinanderprallen;
und dadurch, dass das Verfahren ferner umfasst:

　　　- Verdichten der ausgewählten zerkleinerten Materialblöcke zur Bildung eines Presslings.

**2.** Verfahren nach Anspruch 1, wobei der vorgegebene Höchstdurchmesser 3 mm beträgt.

**3.** Verfahren nach Anspruch 1 oder 2, wobei eine Umfangsgeschwindigkeit 20 bis 100 m/s beträgt.

**4.** Verfahren nach einem der vorhergehenden Ansprüche, wobei eine Druckkraft 10 bis 70 kN/cm beträgt.

**5.** Verfahren nach einem der vorhergehenden Ansprüche, wobei das Verdichten mit einer Pressling-Verdichtungsmaschine erfolgt.

**6.** Verfahren nach einem der vorhergehenden Ansprüche, wobei die zerkleinerten Materialblöcke (402, 404, 406) Gestein (202, 204, 206) und Bitumen (208) umfassen.

**7.** System (100) zur Aufbereitung einer Asphaltfahrbahn für Recyclingzwecke, wobei das System umfasst:

- einen Prallbrecher (102) zum Behandeln von Stücken (200) von ausgebautem Asphaltbelag zur Bildung von zerkleinerten Materialblöcken (402, 404, 406);
- ein Sieb (104) zum Sortieren der zerkleinerten Materialblöcke;

**dadurch gekennzeichnet, dass**
der Prallbrecher so ausgelegt ist, dass er Stücke von ausgebautem Asphaltbelag so behandelt, dass er die Stücke des ausgebauten Asphaltbelags per Fliehkraft beschleunigt und bewirkt, dass die Stücke auf eine Wand aufprallen und aufeinanderprallen;
und dadurch, dass das System ferner umfasst:

- einen Verdichter (106) zum Verdichten der zerkleinerten Materialblöcke zu Presslingen.

**8.** System nach Anspruch 7, wobei der Prallbrecher (102) ein Vertikalprallbrecher ist.

**9.** System nach Anspruch 7 oder 8, wobei das Sieb (104) so ausgelegt ist, dass es zerkleinerte Materialblöcke (402, 404, 406) in einem Bereich eines vorgegebenen Höchstdurchmessers sortiert und dem Verdichter (106) zuführt.

**10.** System nach einem der Ansprüche 7 bis 9, wobei der Verdichter (106) ein Pressling-Verdichter ist.

**11.** Verwendung von Presslingen, die sich mit einem Verfahren nach Anspruch 1 herstellen lassen, zum Herstellen von Asphaltbeton, wobei die Presslinge in einem Asphaltmischverfahren zugegeben werden.

**12.** Verwendung nach Anspruch 11, wobei die Menge Presslinge als Ersatzmaterial oder mit unbehandeltem ausgebautem Asphaltbelag 1 bis 95 % beträgt.

**Revendications**

**1.** Procédé pour le traitement d'une chaussée à revêtement bitumineux à des fins de recyclage, le procédé comprenant les étapes suivantes:

- traitement de morceaux (200) de revêtement bitumineux récupéré pour former des blocs de matériaux concassés (402, 404, 406);
- tri des blocs de matériaux concassés en fonction de leur taille;
- sélection des blocs de matériaux concassés ayant un diamètre maximal prédéterminé;

**caractérisé en ce que** les morceaux du revêtement bitumineux récupéré sont traités par accélération des morceaux du revêtement bitumineux récupéré sous l'effet d'une force centrifuge, les morceaux étant amenés à heurter une paroi et se heurter les uns les autres ; et **en ce que** le procédé comprend en outre

- la compression des blocs de matériaux concassés sélectionnés pour former une briquette.

**2.** Procédé selon la revendication 1, dans lequel le diamètre maximal prédéterminé est de 3 mm.

**3.** Procédé selon la revendication 1 ou 2, dans lequel la vitesse périphérique est de 20 à 100 m/s.

**4.** Procédé selon l'une quelconque des revendications précédentes, dans lequel la force de compression est de 10 à 70 kN/cm.

**5.** Procédé selon l'une quelconque des revendications précédentes, dans lequel la compression est mise en œuvre avec une machine de compression de briquettes.

**6.** Procédé selon l'une quelconque des revendications précédentes, dans lequel les blocs de matériaux concassés (402, 404, 406) comprennent de la roche (202, 204, 206) et du bitume (208).

**7.** Système (100) de traitement d'une chaussée à revêtement bitumineux à des fins de recyclage, le système comprenant:

- une machine à percussion (102) pour traiter les morceaux (200) d'un revêtement bitumineux récupéré pour former des blocs de matériaux concassés (402, 404, 406);
- un tamis (104) pour trier les blocs de matériaux concassés;

**caractérisé en ce que**
la machine à percussion est agencée pour traiter des morceaux de revêtement bitumineux récupéré par accélération des morceaux du revêtement bitumineux récupéré à l'aide d'une force centrifuge, les morceaux étant amenés à heurter une paroi et à se heurter les uns les autres;
et **en ce que** le système comprend en outre

- un compresseur (106) pour comprimer des briquettes à partir des blocs de matériaux concassés.

**8.** Système selon la revendication 7, **caractérisé en ce que** la machine à percussion (102) est un concasseur à percussion à arbre vertical.

**9.** Système selon l'une quelconque des revendications 7-8, dans lequel le tamis (104) est agencé pour trier et introduire dans le compresseur (106) une gamme prédéterminée de diamètres maximaux des blocs de matériaux concassés (402, 404, 406).

**10.** Système selon l'une quelconque des revendications 7 à 9, dans lequel le compresseur (106) est un compresseur de briquettes.

**11.** Utilisation de briquettes pouvant être obtenues par le procédé selon la revendication 1 pour fabriquer un béton bitumineux, les briquettes étant introduites dans un procédé de malaxage du bitume.

**12.** Utilisation selon la revendication 11, dans laquelle la quantité de briquettes est de 1 à 95 %, en remplacement du revêtement bitumineux récupéré non traité, ou avec ce dernier.

FIG. 1

FIG. 2

FIG. 3

FIG. 4

500

FIG. 5

600

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 810276 A